# EUROPEAN PATENT SPECIFICATION

(11) **EP 4 120 738 B1**
(45) Date of publication and mention of the grant of the patent: **08.07.2026**
(21) Application number: 21785387.8
(22) Date of filing: 09.04.2021
(51) Int. Cl.: H04W 36/00, H04W 48/16

(54) **MEASUREMENT OBJECT INDICATION METHOD AND APPARATUS**
VERFAHREN UND VORRICHTUNG ZUR ANZEIGE VON MESSOBJEKTEN
PROCÉDÉ ET APPAREIL D'INDICATION D'OBJET DE MESURE

(30) Priority: 10.04.2020 CN 202010278453
(43) Date of publication of application: 18.01.2023
(73) Proprietor: Huawei Technologies Co., Ltd., Shenzhen, Guangdong 518129, (CN)
(72) Inventor: WANG, Xuesong, Shenzhen, Guangdong 518129 (CN)
(74) Representative: Thun, Clemens
(86) International application number: PCT/CN2021/086281
(87) International publication number: WO 2021/204274

(56) References cited:
- WO-A1-2019/028099
- WO-A1-2020/068821
- CN-A- 110 661 600
- CN-B- 102 098 696
- "3rd Generation Partnership Project; Technical Specification Group Radio Access Network; NR; Radio Resource Control (RRC) protocol specification (Release 16)", 6 April 2020 (2020-04-06), XP052353380, Retrieved from the Internet <URL:https://ftp.3gpp.org/tsg_ran/WG2_RL2/Specifications/202003_final_specs_after_RAN_87/38331-g00.zip 38331-g00.docx> [retrieved on 20200406]
- HUAWEI ET AL: "Definition for the CSI-RS based intra-frequency and inter-frequency", vol. RAN WG4, no. Online; 20200224 - 20200306, 14 February 2020 (2020-02-14), XP051851546, Retrieved from the Internet <URL:https://ftp.3gpp.org/tsg_ran/WG4_Radio/TSGR4_94_e/Docs/R4-2001656.zip R4-2001656.doc> [retrieved on 20200214]
- HUAWEI ET AL: "Definition for the CSI-RS based intra-frequency and inter-frequency", vol. RAN WG4, no. Online Meeting ;20200420 - 20200430, 10 April 2020 (2020-04-10), XP051872806, Retrieved from the Internet <URL:https://ftp.3gpp.org/tsg_ran/WG4_Radio/TSGR4_94_eBis/Docs/R4-2004290.zip R4-2004290.doc> [retrieved on 20200410]

## Description

### TECHNICAL FIELD

This application relates to the field of mobile communication technologies, and in particular, to a measurement object indication method and apparatus.

### BACKGROUND

A mobility management mechanism of a terminal is implemented based on mobility measurement. For example, in a cell handover or reselection scenario, the terminal may measure a neighboring cell, and determine, based on a measurement result, whether to perform cell handover or reselection. The mobility measurement may include intra-frequency and inter-frequency measurement. The intra-frequency measurement means that a to-be-measured target frequency is the same as a center frequency of a serving cell of the terminal. The inter-frequency measurement means that a to-be-measured target frequency is different from a center frequency of a serving cell of the terminal. Therefore, the mobility measurement needs to determine a measurement object (MO) corresponding to a frequency at which a serving cell is located. One MO includes a time-frequency location corresponding to a measurement resource required for measuring one frequency. In this way, the terminal can determine, based on the MO corresponding to the frequency on which the serving cell is located, that the MO corresponding to the frequency on which the serving cell is located belongs to the intra-frequency measurement or the inter-frequency measurement in frequency domain.

Currently, a manner of configuring a MO of a serving cell by a network side for a terminal is more flexible. For example, one or more measurement objects may be configured for the serving cell at the same time. Therefore, a flexible measurement object indication manner needs to be provided for the terminal.

The document "3rd Generation Partnership Project; Technical Specification Group Radio Access Network; NR; Radio Resource Control (RRC) protocol specification (Release 16)", XP052353380, is a standardization document dealing with radio resource control in communications networks. Especially, the instruction of a terminal to perform measurements on measurement objects within the communications network is shown.

### SUMMARY

The present invention is defined by the independent claims. Further advantageous developments are shown by the dependent claims.

### BRIEF DESCRIPTION OF DRAWINGS

FIG. 1 is a schematic diagram of an application scenario according to an embodiment of this application;
FIG. 2 is a schematic diagram of a measurement configuration according to an embodiment of this application;
FIG. 3 is a schematic flowchart of a first measurement object indication method according to an embodiment of this application;
FIG. 4 is a schematic flowchart of a second measurement object indication method according to an embodiment of this application;
FIG. 5 is a schematic flowchart of a third measurement object indication method according to an embodiment of this application;
FIG. 6 is a schematic diagram of an apparatus according to an embodiment of this application; and
FIG. 7 is a schematic diagram of another apparatus according to an embodiment of this application.

### DESCRIPTION OF EMBODIMENTS

The following describes some terms in embodiments of this application, to facilitate understanding of a person skilled in the art.
(1) A terminal includes a device that provides voice and/or data connectivity for a user, and specifically, includes a device that provides voice for a user, includes a device that provides data connectivity for a user, or includes a device that provides voice and data connectivity for a user. For example, the terminal may include a handheld device having a wireless connection function or a processing device connected to a wireless modem. The terminal may communicate with a core network through a radio access network (RAN), and exchange voice or data with the RAN, or exchange voice and data with the RAN. The terminal may include user equipment (UE), a wireless terminal, a mobile terminal, a device-to-device (D2D) communication terminal, a vehicle-to-everything (V2X) terminal, a machine-to-machine/machine type communication (M2M/MTC) terminal, an internet of things (IoT) terminal, a subscriber unit, a subscriber station, a mobile station, a remote station, an access point (AP), a remote terminal, an access terminal, a user terminal, a user agent, a user device, or the like. For example, the terminal may include a mobile phone (or referred to as a "cellular" phone), a computer with a mobile terminal, or a portable, pocket-sized, handheld, computer built-in mobile apparatus. For example, the terminal may be a device such as a personal communication service (PCS) phone, a cordless telephone set, a session initiation protocol (SIP) phone, a wireless local loop (WLL) station, or a personal digital assistant (PDA). Alternatively, the terminal may include a limited device, for example, a device with low power consumption, a device with a limited storage capability, or a device with a limited computing capability. For example, the terminal includes an information sensing device such as a barcode, radio frequency identification (RFID), a sensor, a global positioning system (GPS), or a laser scanner.

By way of example, and not limitation, in embodiments of this application, the terminal may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on a body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands, smart helmets, or smart jewelry for monitoring physical signs.

If the various terminals described above are located on a vehicle (for example, placed in the vehicle or installed in the vehicle), the terminals may be considered as vehicle-mounted terminals. The vehicle-mounted terminals are also referred to as, for example, on-board units (OBU).

In embodiments of this application, the terminal may further include a relay. Alternatively, it may be understood that any device that can perform data communication with a base station may be considered as a terminal.

In embodiments of this application, an apparatus configured to implement a function of a terminal may be a terminal, or may be an apparatus that can support the terminal in implementing the function, for example, a chip system. The apparatus may be installed in the terminal. In this embodiment of this application, the chip system may include a chip, or may include a chip and another discrete component. In the technical solutions provided in embodiments of this application, an example in which an apparatus configured to implement a function of a terminal is a terminal is used to describe the technical solutions provided in embodiments of this application.

(2) A network device includes, for example, an access network (AN) device such as a base station (for example, an access point), and may be a device that communicates with a wireless terminal over an air interface through one or more cells in an access network. Alternatively, the network device is, for example, a roadside unit (RSU) in a vehicle-to-everything (V2X) technology. The base station may be configured to mutually convert a received over-the-air frame and an IP packet, and serve as a router between the terminal and a remaining part of the access network, where the remaining part of the access network may include an IP network. The RSU may be a fixed infrastructure entity that supports a V2X application, and may exchange a message with another entity that supports the V2X application. The network device may further coordinate attribute management of the air interface. For example, the network device may include an evolved NodeB (eNB, or e-NodeB, evolutional Node B) in a long term evolution (LTE) system or a long term evolution-advanced (LTE-A) system, may include a next generation NodeB (gNB) in a 5th generation (the 5th generation, 5G) mobile communication technology new radio (NR) system (which is also referred to as an NR system for short), or may include a centralized unit (CU) and a distributed unit (DU) in a cloud radio access network (Cloud RAN) system. This is not limited in embodiments of this application.

The network device may further include a core network device, and the core network device includes, for example, an access and mobility management function (AMF).

In embodiments of this application, an apparatus configured to implement a function of a network device may be a network device, or may be an apparatus that can support the network device in implementing the function, for example, a chip system. The apparatus may be installed in the network device. In the technical solutions provided in embodiments of this application, an example in which an apparatus configured to implement a function of a network device is a network device is used to describe the technical solutions provided in embodiments of this application.

(3) A resource may also be referred to as a transmission resource, and includes any one or a combination of a time domain resource, a frequency domain resource, a time-frequency resource, a space domain resource, or the like.

(4) Time unit: A time domain resource includes one or more time units, and the time unit may be a radio frame, a subframe, a slot, a symbol, or the like. One radio frame may include a plurality of subframes, one subframe may include one or more slots, and one slot may include at least one symbol. Alternatively, one radio frame may include a plurality of slots, and one slot may include at least one symbol.

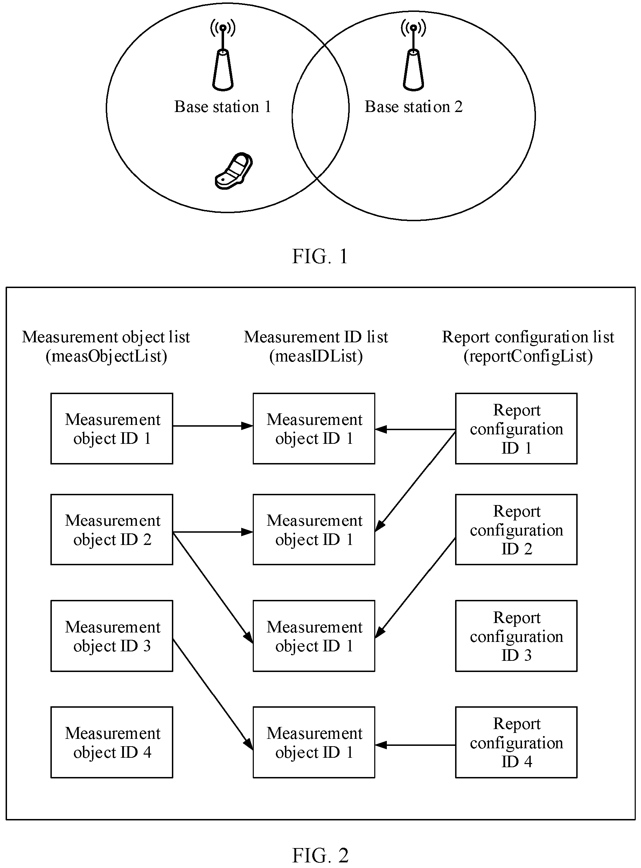

(6) Radio resource control (RRC) state: In LTE, two RRC states are supported: an RRC_IDLE state and an RRC_CONNECTED state. In NR, an RRC_INACTIVE state is introduced. To be specific, NR supports three states: an RRC_IDLE state, an RRC_INACTIVE state, and an RRC_CONNECTED state, as shown in FIG. 1. Different RRC states may be switched. For example, when UE is in the RRC_IDLE state, the UE may switch to the RRC_CONNECTED state by establishing (establish) a connection mechanism, and then fall back to the RRC_IDLE state by releasing (release) the connection mechanism. When the UE is in the RRC_CONNECTED state, the UE may switch to the RRC_INACTIVE state by releasing with suspend (release with suspend) the connection mechanism, and then fall back to the RRC_CONNECTED state by resuming (resume) the connection mechanism. When the UE is in the RRC_INACTIVE state, the UE may switch to the RRC_IDLE state by releasing the connection mechanism.

(7) In a mobility management mechanism of a terminal, continuous services of a wireless network are obtained through cell handover or reselection with different coverage areas. FIG. 1 is a schematic diagram of a mobility management mechanism. A terminal (for example, a mobile phone) is located in a coverage area of a base station 1, and the base station 1 provides a service for the terminal. When the terminal moves out of the coverage area of the base station 1 and enters a coverage area of a base station 2, the base station 2 provides a service for the terminal, to ensure that a wireless network is uninterrupted in a moving process of the terminal. For example, when the terminal is in an RRC_IDLE state and an RRC_INACTIVE state, there is no RRC link between the terminal and a current serving cell. When signal strength of a serving cell on which the terminal camps is less than a specific threshold, neighboring cell measurement may be performed to measure signal strength of a neighboring cell. If the signal strength of the serving cell on which the terminal camps reaches the threshold, the terminal is handed over to the neighboring cell and camps on the neighboring cell. When the terminal is in the RRC_IDLE state and the RRC_INACTIVE state, a process of handing over the terminal from a serving cell to another cell is a cell reselection process. For another example, when the terminal is in an RRC_CONNECTED state, there is an RRC connection between the terminal and a current serving cell, and the current serving cell may configure the terminal to perform neighboring cell measurement by using RRC signaling. The terminal reports a measurement result of a neighboring cell to the serving cell, and the serving cell hands over the terminal to a cell with better signal quality based on the measurement result. When the terminal is in the RRC_CONNECTED state, a process of handing over the terminal from a serving cell to a neighboring cell is a cell handover process. The current serving cell herein is a cell that currently provides a service for the terminal, and the neighboring cell may be understood as another cell other than the serving cell in which the terminal can find a signal in the serving cell.

It may be learned that the mobility management mechanism of the terminal is implemented based on mobility measurement. For example, in a cell handover or reselection scenario, the terminal measures a neighboring cell, and determines, based on a measurement result, whether to perform cell handover or reselection. There are a plurality of types of mobility measurement, for example, intra-frequency measurement or inter-frequency measurement. The intra-frequency measurement means that a to-be-measured target frequency is the same as a center frequency of a serving cell of the terminal. The inter-frequency measurement means that a to-be-measured target frequency is different from a center frequency of a serving cell of the terminal. For another example, in terms of measurement manners, the mobility measurement includes measurement based on a synchronization signal block (SSB) and measurement based on a channel state information reference signal (CSI-RS). For example, when UE is in an RRC idle state, the UE measures a cell based on the SSB, for example, a cell is measured based on the SSB in a cell reselection process. When the UE is in an RRC connected state, the UE measures a cell based on the SSB or the CSI-RS, for example, a cell is measured based on the CSI-RS in a cell handover process.

In other words, specifically, the mobility measurement may include the intra-frequency SSB-based measurement, the inter-frequency SSB-based measurement, the intra-frequency CSI-RS-based measurement, and the inter-frequency CSI-RS-based measurement.

### (8) Measurement configuration

In a connected state, a network side sends a measurement configuration (measConfig) to a terminal (for example, by using an RRC reconfiguration message). For example, the measurement configuration includes the following content:
1. Measurement object (MO): A measurement object is an information element that includes a measurement resource required for mobility measurement. For example, the measurement object includes a time-frequency location, a cell list, a frequency-level offset, a cell-level offset, and the like of a measurement resource required for measuring one frequency.
2. Report configuration: A report configuration is an information element that indicates a specific manner of performing mobility measurement. In the report configuration, a network side notifies UE of specific details of to-be-performed measurement, such as a report criterion. For example, the network side actively reports a measurement result, for example, periodically reports a measurement result; or the network side passively reports measurement, for example, reports when the network side is triggered by a specific event. For another example, the network side reports a type of a reference signal used for measurement, such as SSB-based measurement or CSI-RS-based measurement. For another example, the network side reports a report format, for example, whether only cell-level measurement is reported, or both of cell-level measurement and beam-level measurement are reported, a measurement type, a quantity of reported cell-level measurements, and a quantity of reported beam-level measurements.
3. Measurement identity: A measurement identity is a combination of a measurement object and a report configuration. The combination of the measurement object and the report configuration may determine one piece of measurement based on a location of a measurement resource, measurement execution, and all details about reporting a measurement report. It should be understood that the network side configures one measurement identity only when the network side determines that both of the measurement object and the report configuration are configured for UE. One measurement object or report configuration may be associated with any one or more report configurations that have a same RAT type as the measurement object or the report configuration. FIG. 2 is a schematic diagram of a relationship between a measurement object, a report configuration, and a measurement identity.

It should be noted that the foregoing three items are examples of content included in the measurement configuration. Actually, the measurement configuration may further include more content, for example, a serving cell quality threshold (S-measure). For example, the UE performs neighboring cell measurement only when RSRP of a serving cell is lower than the threshold. The measurement configuration may further include an L3 filter coefficient configuration (quantity configuration), a measurement gap configuration, a measurement gap sharing configuration, and the like. Examples are not enumerated in embodiments of this application.

The foregoing explains terms in embodiments of this application. The following describes background technologies related to this application.

A network side sends a measurement configuration (measConfig) to a terminal, where the measurement configuration includes a plurality of measurement objects. A part of the plurality of measurement objects are measurement objects corresponding to a frequency on which a serving cell of UE is located. Therefore, the terminal needs to learn which measurement objects are the measurement objects corresponding to the frequency on which the serving cell is located. In this way, the terminal can determine, based on the measurement objects corresponding to the frequency on which the serving cell is located, whether measurement of to-be-measured measurement resources is intra-frequency measurement or inter-frequency measurement, and then determine parameters such as a measurement latency indicator, whether measurement gap is required, and a carrier-specific scaling factor.

Currently, for a terminal, which measurement objects are measurement objects corresponding to the frequency on which the serving cell is located need to be indicated by the network side. An indication manner specified in a protocol is that a servingCellMO field in a dedicated serving cell configuration (servingCellConfig) corresponding to the serving cell indicates the measurement objects. However, there is only one servingCellMO field. This means that the protocol only allows indicating one corresponding MO for one serving cell. However, to avoid mutual interference between measurement, the network side may need to configure a plurality of measurement objects for one serving cell at the same time. Therefore, according to a conventional technology, the network side cannot indicate, by using the servingCellMO field in the dedicated serving cell configuration (servingCellConfig), the plurality of measurement objects at the same time. Therefore, a measurement object indication manner in the conventional technology is inflexible.

In view of this, an embodiment of this application provides a measurement object indication method. In this method, when a network side configures, for a terminal, a plurality of measurement objects at the same time, the network side may indicate, to the terminal in a specific manner, which measurement objects are measurement objects corresponding to a frequency on which a serving cell of the terminal is located. It should be noted that the measurement object indication method provided in this embodiment of this application may be applicable to a scenario shown in FIG. 1 or any scenario in which mobility measurement needs to be performed. The following uses the scenario shown in FIG. 1 as an example.

### First solution

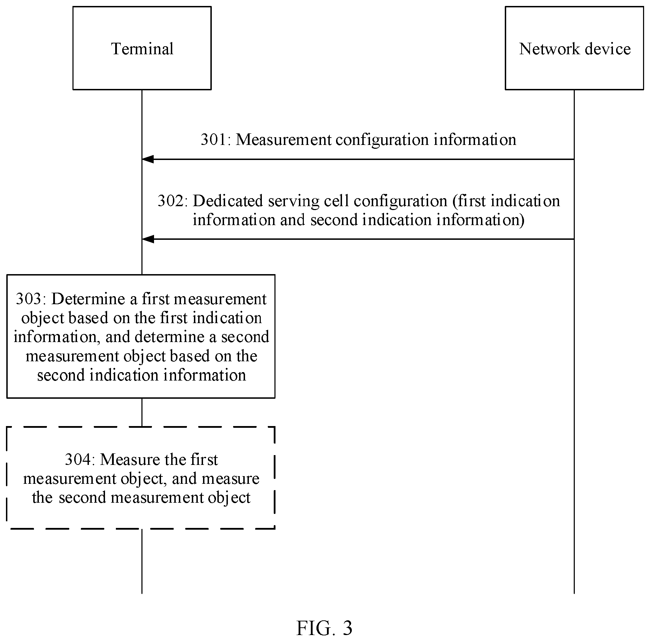

FIG. 3 is a measurement object indication method according to the present invention. A procedure of the method includes the following steps.

Step 301: A terminal receives measurement configuration information sent by a network device, where the measurement configuration information includes a first measurement object and a second measurement object.

For example, the measurement configuration information may be a measConfig. For the measConfig, refer to the foregoing description.

In this embodiment of this application, the measurement configuration information includes a plurality of measurement objects, for example, the first measurement object and the second measurement object. The first measurement object includes a first measurement resource configuration for first-type measurement, and the first measurement resource configuration may include a time-frequency location of the measurement resource for the first-type measurement. The second measurement object includes a second measurement resource configuration for second-type measurement, and the second measurement resource configuration may include a time-frequency location of the measurement resource for the second-type measurement. The first-type measurement is SSB-based measurement, and the second-type measurement is CSI-RS-based measurement; or the first-type measurement is CSI-RS-based measurement, and the second-type measurement is SSB-based measurement.

It should be noted that, in the present invention, the first measurement object and the second measurement object do not include both of the first measurement resource configuration for the first-type measurement and the second measurement resource configuration for the second-type measurement The first measurement object includes the first measurement resource configuration for the first-type measurement and does not include the second measurement resource configuration for the second-type measurement, and the second measurement object includes the second measurement resource configuration for the second-type measurement and does not include the first measurement resource configuration for the first-type measurement. In other words, the first measurement resource configuration for the first-type measurement and the second measurement resource configuration for the second-type measurement are separately configured for two different measurement objects.

In some embodiments, the measurement configuration information may be carried in an RRC reconfiguration message and sent to the terminal. Therefore, before step 301, another step (not shown in the figure) may be further included. For example, a serving cell of the terminal sends a cell handover request to a neighboring cell, the serving cell receives a handover request response fed back by the neighboring cell indicating that the neighboring cell agrees on the handover, and then the serving cell sends an RRC reconfiguration message to the terminal.

Step 302: The terminal receives a dedicated serving cell configuration, where the dedicated serving cell configuration includes first indication information and second indication information, the first indication information indicates the first measurement object, and the second indication information indicates the second measurement object.

Optionally, the first indication information or the second indication information may be carried in any field in the dedicated serving cell configuration. For example, the first indication information is included in servingCellMO in the dedicated serving cell configuration, and the second indication information is included in another field other than the servingCellMO in the dedicated serving cell configuration, for example, a field newly added to the dedicated serving cell configuration. Alternatively, the second indication information is included in servingCellMO in the serving cell configuration, and the first indication information is included in another field other than the servingCellMO in the dedicated serving cell configuration.

For example, the first-type measurement is SSB-based measurement, and the second-type measurement is CSI-RS-based measurement. The first indication information is carried in servingCellMO in the dedicated serving cell configuration, and the second indication information is carried in another field other than the servingCellMO in the dedicated serving cell configuration. Alternatively, the first-type measurement is SSB-based measurement, and the second-type measurement is CSI-RS-based measurement. The first indication information is carried in another field other than the servingCellMO in the dedicated serving cell configuration, and the second indication information is carried in the servingCellMO in the dedicated serving cell configuration. This is not limited in this embodiment of this application.

In some embodiments, the first indication information and the second indication information may have a plurality of forms, for example, may be a MO id or another number. The measurement configuration information sent by the network device includes a plurality of MOs, and each MO corresponds to one MO id. It is assumed that the first indication information is a MO id1, the first indication information indicates that a MOid in the measurement configuration information is the first measurement object of the MO id1. It is assumed that the second indication information is a MO id2, the second indication information indicates that a MOid in the measurement configuration information is the second measurement object of the MO id2.

Step 303: The terminal determines the first measurement object based on the first indication information, and determines the second measurement object based on the second indication information.

The terminal determines, in the measurement configuration information sent by the network side based on the first indication information, the first measurement object indicated by the first indication information, and the terminal determines, in the measurement configuration information sent by the network side based on the second indication information, the second measurement object indicated by the second indication information. Therefore, the terminal may determine, by using a plurality of pieces of indication information in the dedicated serving cell configuration, a plurality of measurement objects corresponding to a frequency on which a serving cell is located.

Step 304: The terminal measures the first measurement object, and measures the second measurement object.

Step 304 is an optional step, and is represented by a dashed line in the figure.

After the terminal determines the plurality of measurement objects corresponding to the frequency on which the serving cell is located, the terminal may perform intra-frequency or inter-frequency measurement on the plurality of measurement objects. Measuring the first measurement object herein may be understood as that the first measurement object includes a first measurement resource configuration for the first-type measurement, the first measurement resource configuration includes a first frequency domain location, and the terminal may perform intra-frequency or inter-frequency first-type measurement based on the first frequency domain location. Measuring the second measurement object herein may be understood as that the second measurement object includes a second measurement resource configuration for the second-type measurement, the second measurement resource configuration includes a second frequency domain location, and the terminal may perform intra-frequency or inter-frequency second-type measurement based on the second frequency domain location.

It should be noted that intra-frequency or inter-frequency measurement in this embodiment of this application may include intra-frequency measurement in a serving cell or intra-frequency or inter-frequency measurement in a neighboring cell.

### Second solution

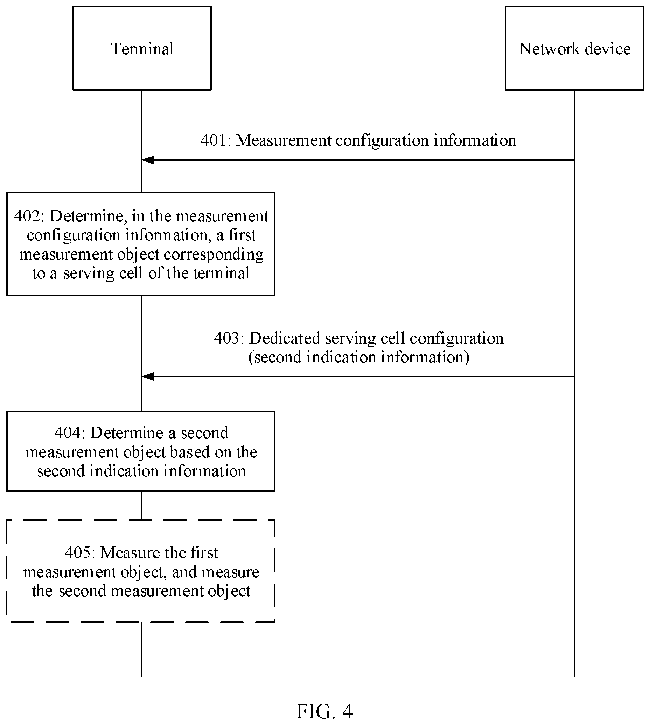

FIG. 4 is another measurement object indication method according to an embodiment of this application. A procedure of the method includes the following steps.

Step 401: A terminal receives measurement configuration information sent by a network device, where the measurement configuration information includes a first measurement object and a second measurement object.

For example, the measurement configuration information may be a measConfig. For the measConfig, refer to the foregoing description.

In this embodiment of this application, the measurement configuration information includes a plurality of measurement objects, for example, the first measurement object and the second measurement object. The first measurement object includes a first measurement resource configuration for first-type measurement, and the second measurement object includes a second measurement resource configuration for second-type measurement. It should be noted that, in this embodiment of this application, the first measurement object and the second measurement object do not include both of the first measurement resource configuration for the first-type measurement and the second measurement resource configuration for the second-type measurement. The first-type measurement is CSI-RS-based measurement, and the second-type measurement is SSB-based measurement.

In an implementation, the first measurement object includes the first measurement resource configuration for the first-type measurement and a first serving cell indication; the first measurement resource configuration is used for the first-type measurement of a serving cell indicated by the first serving cell indication; and the second measurement object includes the second measurement resource configuration for the second-type measurement. In other words, the first measurement object in the measurement configuration includes the first serving cell indication, the second measurement object does not include the serving cell indication, and the second measurement object may be indicated in another manner.

Step 402: The terminal determines, in the measurement configuration information, the first measurement object corresponding to a serving cell.

As described above, the first measurement object includes the first serving cell indication, and the first serving cell indication may be a serving cell identity. The terminal may traverse the measurement configuration information to search for a first measurement object whose serving cell identity is consistent with a serving cell of the terminal. According to this manner, the terminal determines the first measurement object of a frequency on which the serving cell is located.

Step 403: The terminal receives a dedicated serving cell configuration sent by the network device, where the dedicated serving cell configuration includes second indication information, and the second indication information indicates the second measurement object.

In other words, the terminal determines the second measurement object of the serving cell from the measurement configuration information by using the second indication information in the dedicated serving cell configuration.

It should be noted that a sequence of performing step 402 and step 403 is not limited in this embodiment of this application.

Step 404: The terminal determines the second measurement object based on the second indication information.

Step 405: The terminal measures the first measurement object, and measures the second measurement object.

Step 405 is an optional step, and is represented by a dashed line in the figure.

Therefore, in the second solution, not all of the plurality of measurement objects corresponding to the frequency on which the serving cell is located are indicated by using the dedicated serving cell configuration, and the plurality of measurement objects may be indicated in different indication manners. This is different from the first solution. For example, one measurement object may be indicated by using the dedicated serving cell configuration, or another measurement object of the frequency on which the serving cell is located may be indicated by using the serving cell indication included in a measurement object in the measurement configuration information.

### Third solution

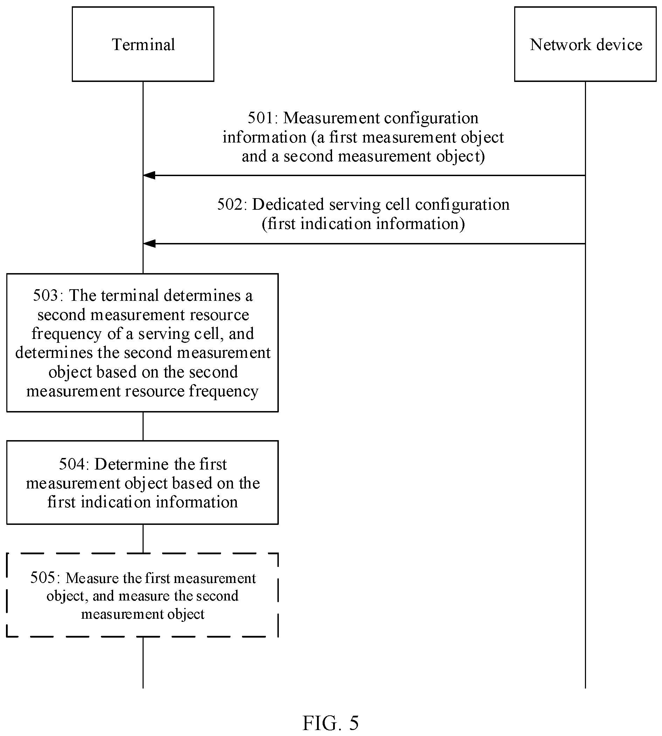

FIG. 5 is another measurement object indication method according to an embodiment of this application. A procedure of the method includes the following steps.

Step 501: A terminal receives measurement configuration information sent by a network device, where the measurement configuration information includes a first measurement object and a second measurement object, the first measurement object includes a first measurement resource configuration for first-type measurement, and the second measurement object includes a second measurement resource configuration for second-type measurement.

It should be noted that, in this embodiment of this application, the first measurement object and the second measurement object do not include both of the first measurement resource configuration for the first-type measurement and the second measurement resource configuration for the second-type measurement. The first-type measurement is CSI-RS-based measurement, and the second-type measurement is SSB-based measurement.

Step 502: The terminal receives a dedicated serving cell configuration sent by the network device, where the dedicated serving cell configuration includes first indication information, and the first indication information indicates the first measurement object.

In other words, the first measurement object is indicated by using the first indication information in the dedicated serving cell configuration. For example, the first indication information is carried in a servingCellMO in the dedicated serving cell configuration. It should be noted that, in a conventional technology, the indication information carried in the servingCellMO in the dedicated serving cell configuration usually indicates a measurement resource configuration for SSB-based measurement in the measurement configuration information. However, in the third solution of this application, the indication information carried in the servingCellMO in the dedicated serving cell configuration indicates a measurement resource configuration for CSI-RS-based measurement in the measurement configuration information, and the measurement resource configuration for SSB-based measurement is determined in another manner.

Step 503: The terminal determines a second measurement frequency of a serving cell, and determines the second measurement object based on the second measurement frequency.

For example, the second measurement frequency of the serving cell may be a second measurement absolute frequency included in a common serving cell configuration (servingCellConfigCommon). For example, the network side indicates, by using an absoluteFrequencySSB field in the common serving cell configuration (servingCellConfigCommon) of the serving cell, a center frequency of an SSB corresponding to the serving cell, and the center frequency of the SSB is the second measurement absolute frequency. It should be noted that the network side may alternatively indicate the second measurement frequency of the serving cell in another manner. This is not limited in this embodiment of this application.

After the terminal determines the second measurement frequency of the serving cell, the terminal may determine the second measurement object based on the second measurement frequency. Specifically, the terminal selects, from all measurement objects in the measurement configuration information, a measurement object that includes a second measurement resource frequency and whose second measurement resource frequency is the same as the second measurement frequency of the serving cell as the second measurement object. It should be noted that the second measurement frequency is different from the second measurement resource frequency. A MO in the measurement configuration information may be a measurement resource configuration for CSI-RS-based measurement, or may be a measurement resource configuration for SSB-based measurement. Because the second measurement frequency is a frequency of an SSB, when the terminal searches for the second measurement object from the plurality of measurement objects, the terminal may first search for, from all measurement objects, a measurement object including the measurement resource configuration for SSB-based measurement measurement. It is assumed that three measurement objects are found, and then it is assumed that measurement resource frequencies included in the three measurement objects are different, the terminal may further search for a measurement object whose second measurement resource frequency is the same as the second measurement frequency (for example, a frequency of the SSB) from the three measurement objects.

Therefore, in this embodiment of this application, the indication information carried in the servingCellMO in the dedicated serving cell configuration indicates the measurement resource configuration for CSI-RS-based measurement. The measurement resource configuration for SSB-based measurement is determined by properly using the center frequency of the SSB in the common serving cell configuration.

Step 504: The terminal determines the first measurement object based on the first indication information.

It should be noted that a sequence of performing step 503 and step 504 is not limited in this embodiment of this application.

Step 505: The terminal measures the first measurement object, and measures the second measurement object.

Step 505 is an optional step, and is represented by a dashed line in the figure.

Therefore, in the third solution, the first measurement object of the frequency on which the serving cell is located is indicated by using the dedicated serving cell configuration, and the second measurement object is determined by using the second measurement absolute frequency included in the common serving cell configuration (servingCellConfigCommon).

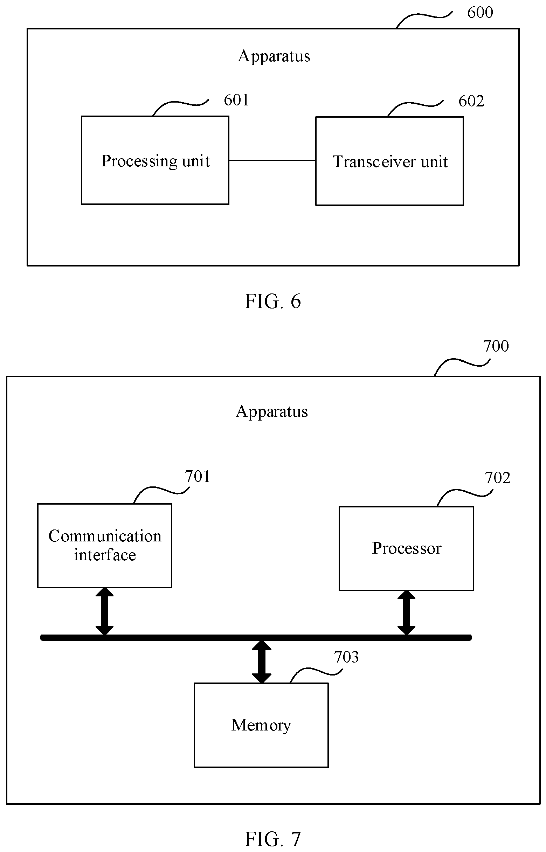

Same as the foregoing concept, as shown in FIG. 6, an embodiment of this application further provides an apparatus 600. The apparatus 600 includes a transceiver unit 602 and a processing unit 601.

In an example, the apparatus 600 is configured to implement a function of the terminal in the foregoing method. The apparatus may be a terminal device, or may be an apparatus in the terminal device, for example, a chip system.

The processing unit 601 is configured to control data receiving and sending of the transceiver unit 602.

The transceiver unit 602 is configured to receive measurement configuration information, where the measurement configuration information includes a first measurement object and a second measurement object.

The transceiver unit 602 is further configured to receive a dedicated serving cell configuration, where the dedicated serving cell configuration includes first indication information and second indication information, the first indication information indicates the first measurement object, and the second indication information indicates the second measurement object.

Optionally, the first indication information is included in servingCellMO in the dedicated serving cell configuration, and the second indication information is included in another field other than the servingCellMO in the dedicated serving cell configuration.

Optionally, the first measurement object includes a first measurement resource configuration for first-type measurement, and the second measurement object includes a second measurement resource configuration for second-type measurement.

Optionally, the first-type measurement is SSB-based measurement, and the second-type measurement is CSI-RS-based measurement; or the first-type measurement is CSI-RS-based measurement, and the second-type measurement is SSB-based measurement.

Optionally, the first measurement object includes the first measurement resource configuration for the first-type measurement and does not include the second measurement resource configuration for the second-type measurement, and the second measurement object includes the second measurement resource configuration for the second-type measurement and does not include the first measurement resource configuration for the first-type measurement.

In an example, the apparatus 600 is configured to implement a function of the terminal in the foregoing method. The apparatus may be a terminal device, or may be an apparatus in the terminal device, for example, a chip system.

The processing unit 601 is configured to control data receiving and sending of the transceiver unit 602.

The transceiver unit 602 is configured to receive measurement configuration information, where the measurement configuration information includes a first measurement object and a second measurement object; the first measurement object includes a first measurement resource configuration for first-type measurement and a first serving cell indication; the first measurement resource configuration is used for the first-type measurement on a frequency on which a serving cell indicated by the first serving cell indication is located; and the second measurement object includes a second measurement resource configuration for second-type measurement.

Optionally, the transceiver unit 602 is further configured to receive a dedicated serving cell configuration, where the dedicated serving cell configuration includes second indication information, and the second indication information indicates the second measurement object.

Optionally, the first-type measurement is CSI-RS-based measurement, and the second-type measurement is SSB-based measurement.

Optionally, the first measurement object includes the first measurement resource configuration for the first-type measurement and does not include the second measurement resource configuration for the second-type measurement, and the second measurement object includes the second measurement resource configuration for the second-type measurement and does not include the first measurement resource configuration for the first-type measurement.

In an example, the apparatus 600 is configured to implement a function of the terminal in the foregoing method. The apparatus may be a terminal device, or may be an apparatus in the terminal device, for example, a chip system.

The transceiver unit 602 is configured to receive measurement configuration information, where the measurement configuration information includes a first measurement object and a second measurement object.

The transceiver unit 602 is further configured to receive a dedicated serving cell configuration, where the dedicated serving cell configuration includes first indication information, and the first indication information indicates the first measurement object.

The processing unit 601 is configured to: determine a second measurement frequency of a serving cell, and determine the second measurement object in the measurement configuration information based on the second measurement frequency.

Optionally, the second measurement frequency of the serving cell includes a second measurement absolute frequency included in a common serving cell configuration.

Optionally, the processing unit 601 is specifically configured to select the second measurement object from all measurement objects included in the measurement configuration information, where the second measurement object includes a second measurement resource frequency, and the second measurement resource frequency is the same as the second measurement frequency of the serving cell.

Optionally, the first measurement object includes a first measurement resource configuration for first-type measurement, and the second measurement object includes a second measurement resource configuration for second-type measurement.

Optionally, the first-type measurement is CSI-RS-based measurement, and the second-type measurement is SSB-based measurement.

Optionally, the first measurement object includes the first measurement resource configuration for the first-type measurement and does not include the second measurement resource configuration for the second-type measurement, and the second measurement object includes the second measurement resource configuration for the second-type measurement and does not include the first measurement resource configuration for the first-type measurement.

In an example, the apparatus 600 is configured to implement a function of the network device (for example, a base station) in the foregoing method. The apparatus may be a network device, or may be an apparatus in the network device, for example, a chip system.

The processing unit 601 is configured to control data receiving and sending of the transceiver unit 602.

The transceiver unit 602 is configured to send measurement configuration information, where the measurement configuration information includes a first measurement object and a second measurement object.

The transceiver unit 602 is further configured to send a dedicated serving cell configuration, where the dedicated serving cell configuration includes first indication information and second indication information, the first indication information indicates the first measurement object, and the second indication information indicates the second measurement object.

Optionally, the first indication information is included in servingCellMO in the dedicated serving cell configuration, and the second indication information is included in another field other than the servingCellMO in the dedicated serving cell configuration.

Optionally, the first measurement object includes a first measurement resource configuration for first-type measurement, and the second measurement object includes a second measurement resource configuration for second-type measurement.

Optionally, the first-type measurement is SSB-based measurement, and the second-type measurement is CSI-RS-based measurement; or the first-type measurement is CSI-RS-based measurement, and the second-type measurement is SSB-based measurement.

Optionally, the first measurement object includes the first measurement resource configuration for the first-type measurement and does not include the second measurement resource configuration for the second-type measurement, and the second measurement object includes the second measurement resource configuration for the second-type measurement and does not include the first measurement resource configuration for the first-type measurement.

In an example, the apparatus 600 is configured to implement a function of the network device (for example, a base station) in the foregoing method. The apparatus may be a network device, or may be an apparatus in the network device, for example, a chip system.

The processing unit 601 is configured to control data receiving and sending of the transceiver unit 602.

The transceiver unit 602 is configured to send measurement configuration information, where the measurement configuration information includes a first measurement object and a second measurement object; the first measurement object includes a first measurement resource configuration for first-type measurement and a first serving cell indication; the first measurement resource configuration is used for the first-type measurement on a frequency on which a serving cell indicated by the first serving cell indication is located; and the second measurement object includes a second measurement resource configuration for second-type measurement.

Optionally, the transceiver unit 602 is further configured to send a dedicated serving cell configuration, where the dedicated serving cell configuration includes second indication information, and the second indication information indicates the second measurement object.

Optionally, the first-type measurement is CSI-RS-based measurement, and the second-type measurement is SSB-based measurement.

Optionally, the first measurement object includes the first measurement resource configuration for the first-type measurement and does not include the second measurement resource configuration for the second-type measurement, and the second measurement object includes the second measurement resource configuration for the second-type measurement and does not include the first measurement resource configuration for the first-type measurement.

In an example, the apparatus 600 is configured to implement a function of the network device (for example, a base station) in the foregoing method. The apparatus may be a network device, or may be an apparatus in the network device, for example, a chip system.

The processing unit 601 is configured to control data receiving and sending of the transceiver unit 602.

The transceiver unit 602 is configured to send measurement configuration information, where the measurement configuration information includes a first measurement object and a second measurement object.

The transceiver unit 602 is further configured to send a dedicated serving cell configuration, where the dedicated serving cell configuration includes first indication information, and the first indication information indicates the first measurement object.

The transceiver unit 602 is further configured to send a second measurement frequency of a serving cell, so that a terminal determines the second measurement object in the measurement configuration information based on the second measurement frequency.

Optionally, the transceiver unit 602 is specifically configured to send a common serving cell configuration, where the second measurement frequency is a second measurement absolute frequency included in the common serving cell configuration.

Optionally, the first measurement object includes a first measurement resource configuration for first-type measurement, and the second measurement object includes a second measurement resource configuration for second-type measurement.

Optionally, the first-type measurement is CSI-RS-based measurement, and the second-type measurement is SSB-based measurement.

Optionally, the first measurement object includes the first measurement resource configuration for the first-type measurement and does not include the second measurement resource configuration for the second-type measurement, and the second measurement object includes the second measurement resource configuration for the second-type measurement and does not include the first measurement resource configuration for the first-type measurement.

For specific execution processes of the processing unit 601 and the transceiver unit 602, refer to descriptions in the foregoing method embodiments. In embodiments of this application, division into the modules is an example, and is merely logical function division. In an actual implementation, there may be another division manner. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

As another optional variation, the apparatus may be a chip system. In this embodiment of this application, the chip system may include a chip, or may include a chip and another discrete component. For example, the apparatus includes a processor and an interface, and the interface may be an input/output interface. The processor completes a function of the processing unit 601, and the interface completes a function of the transceiver unit 602. The apparatus may further include a memory. The memory is configured to store a program that may be run on the processor, and the processor implements the methods in the foregoing embodiments when the processor executes the program.

Same as the foregoing concept, as shown in FIG. 7, an embodiment of this application further provides an apparatus 700. The apparatus 700 includes a communication interface 701, at least one processor 702, and at least one memory 703. The communication interface 701 is configured to communicate with another device through a transmission medium, so that an apparatus in the apparatus 700 can communicate with the another device. The memory 703 is configured to store a computer program. The processor 702 invokes the computer program stored in the memory 703, and receives and sends data by using the communication interface 701, to implement the method in the foregoing embodiment.

For example, when the apparatus 700 is a terminal, the memory 703 is configured to store a computer program. The processor 702 invokes the computer program stored in the memory 703, and performs, by using the communication interface 701, the method performed by the terminal in the foregoing embodiment. When the apparatus 700 is a network device, the memory 703 is configured to store a computer program. The processor 702 invokes the computer program stored in the memory 703, and performs, by using the communication interface 701, the method performed by the network device (for example, a base station) in the foregoing embodiment.

In this embodiment of this application, the communication interface 701 may be a transceiver, a circuit, a bus, a module, or another type of communication interface. The processor 702 may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module. The memory 703 may be a non-volatile memory such as a hard disk drive (HDD) or a solid-state drive (SSD), or may be a volatile memory, for example, a random-access memory (RAM). The memory is any other medium that can carry or store expected program code in a form of instructions or a data structure and that can be accessed by a computer, but is not limited thereto. The memory in this embodiment of this application may alternatively be a circuit or any other apparatus that can implement a storage function. The memory 703 is coupled to the processor 702. Couplings in this embodiment of this application are indirect couplings or communication connections between apparatuses, units, or modules, may be in an electrical form, a mechanical form, or another form, and are used for information exchange between the apparatuses, the units, or the modules. In another implementation, the memory 703 may be alternatively located outside the apparatus 700. The processor 702 and the memory 703 may perform an operation cooperatively. The processor 702 may execute program instructions stored in the memory 703. At least one of the at least one memory 703 may be included in the processor 702. A connection medium between the communication interface 701, the processor 702, and the memory 703 is not limited in this embodiment of this application. For example, in this embodiment of this application, in FIG. 7, the memory 703, the processor 702, and the communication interface 701 may be connected through a bus. The bus may be classified into an address bus, a data bus, a control bus, and the like.

It may be understood that the apparatus in the embodiment shown in FIG. 6 may be implemented by the apparatus 700 shown in FIG. 7. Specifically, the processing unit 601 may be implemented by the processor 702, and the transceiver unit 602 may be implemented by the communication interface 701.

All or some of the methods in embodiments of this application may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, the procedure or functions according to embodiments of the present invention are all or partially generated. The computer may be a general-purpose computer, a dedicated computer, a computer network, a network device, user equipment, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL for short)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (DVD for short)), a semiconductor medium (for example, a solid state disk Solid State Disk, SSD), or the like.
or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, a solid state disk Solid State Disk, SSD), or the like.

The foregoing embodiments are merely used to describe the technical solutions of this application in detail. The descriptions of the foregoing embodiments are merely intended to help understand the method in embodiments of the present invention, and shall not be construed as a limitation on embodiments of the present invention. Any variation or replacement readily figured out by a person skilled in the art shall fall within the protection scope of embodiments of the present invention.

## Claims

1. A measurement object indication method, comprising:
receiving (301), by a terminal, measurement configuration information, wherein the measurement configuration information comprises a first measurement object and a second measurement object; and
receiving (302), by the terminal, a dedicated serving cell configuration, wherein the dedicated serving cell configuration comprises first indication information and second indication information, the first indication information indicates the first measurement object, and the second indication information indicates the second measurement object,
wherein the first measurement object comprises a first measurement resource configuration for first-type measurement, and the second measurement object comprises a second measurement resource configuration for second-type measurement, and
**characterized in that**
the first-type measurement is SSB-based measurement, and the second-type measurement is CSI-RS-based measurement; or the first-type measurement is CSI-RS-based measurement, and the second-type measurement is SSB-based measurement.

2. The method according to claim 1, wherein the first indication information is comprised in servingCellMO in the dedicated serving cell configuration, and the second indication information is comprised in another field other than the servingCellMO in the dedicated serving cell configuration.

3. The method according to any one of claims 1 or 2, wherein the first measurement object comprises the first measurement resource configuration for the first-type measurement and does not comprise the second measurement resource configuration for the second-type measurement, and the second measurement object comprises the second measurement resource configuration for the second-type measurement and does not comprise the first measurement resource configuration for the first-type measurement.

4. A measurement object indication apparatus (600), the apparatus being a terminal device, or an apparatus in a terminal device. comprising:
a processing unit (601), configured to control a receiving unit (602) to receive and send data; and
the receiving unit (602), configured to receive measurement configuration information, wherein the measurement configuration information comprises a first measurement object and a second measurement object;
the receiving unit (602) is further configured to receive a dedicated serving cell configuration, wherein the dedicated serving cell configuration comprises first indication information and second indication information, the first indication information indicates the first measurement object, and the second indication information indicates the second measurement object,
wherein the first measurement object comprises a first measurement resource configuration for first-type measurement, and the second measurement object comprises a second measurement resource configuration for second-type measurement, and
**characterized in that**
the first-type measurement is SSB-based measurement, and the second-type measurement is CSI-RS-based measurement; or the first-type measurement is CSI-RS-based measurement, and the second-type measurement is SSB-based measurement.

5. The apparatus (600) according to claim 4, wherein the first indication information is comprised in servingCellMO in the dedicated serving cell configuration, and the second indication information is comprised in another field other than the servingCellMO in the dedicated serving cell configuration.

## Patentansprüche

1. Messobjektanzeigeverfahren, das umfasst:
Empfangen (301), durch ein Endgerät, von Messkonfigurationsinformationen, wobei die Messkonfigurationsinformationen ein erstes Messobjekt und ein zweites Messobjekt umfassen; und
Empfangen (302), durch das Endgerät, einer dedizierten Konfiguration einer aktiven Funkzelle, wobei die dedizierte Konfiguration der aktiven Funkzelle erste Anzeigeinformationen und zweite Anzeigeinformationen umfasst, die ersten Anzeigeinformationen das erste Messobjekt anzeigen und die zweiten Anzeigeinformationen das zweite Messobjekt anzeigen,
wobei das erste Messobjekt eine erste Messressourcenkonfiguration für eine Messung einer ersten Art umfasst und das zweite Messobjekt eine zweite Messressourcenkonfiguration für eine Messung einer zweiten Art umfasst und
**dadurch gekennzeichnet, dass**
die Messung der ersten Art eine SSB-basierte Messung ist und die Messung der zweiten Art eine CSI-RS-basierte Messung ist; oder die Messung der ersten Art eine CSI-RS-basierte Messung ist und die Messung der zweiten Art eine SSB-basierte Messung ist.

2. Verfahren nach Anspruch 1, wobei die ersten Anzeigeinformationen in einem aktiveFunkzelleMO in der dedizierten Konfiguration der aktiven Funkzelle enthalten sind und die zweiten Anzeigeinformationen in einem anderen Feld als dem aktiveFunkzelleMO in der dedizierten Konfiguration der aktiven Funkzelle enthalten sind.

3. Verfahren nach einem der Ansprüche 1 oder 2, wobei das erste Messobjekt die erste Messressourcenkonfiguration für die Messung der ersten Art umfasst und nicht die zweite Messressourcenkonfiguration für die Messung der zweiten Art umfasst, und das zweite Messobjekt die zweite Messressourcenkonfiguration für die Messung der zweiten Art umfasst und nicht die erste Messressourcenkonfiguration für die Messung der ersten Art umfasst.

4. Messobjektanzeigeeinrichtung (600), wobei die Einrichtung ein Endgerät oder eine Einrichtung in einem Endgerät ist, das umfasst:
eine Verarbeitungseinheit (601), die konfiguriert ist, um eine Empfangseinheit (602) zu steuern, um Daten zu empfangen und zu senden; und
die Empfangseinheit (602), die konfiguriert ist, um Messkonfigurationsinformationen zu empfangen, wobei die Messkonfigurationsinformationen ein erstes Messobjekt und ein zweites Messobjekt umfassen;
die Empfangseinheit (602) ferner konfiguriert ist, um eine dedizierte Konfiguration der aktiven Funkzelle zu empfangen, wobei die dedizierte Konfiguration der aktiven Funkzelle erste Anzeigeinformationen und zweite Anzeigeinformationen umfasst, die ersten Anzeigeinformationen das erste Messobjekt anzeigen und die zweiten Anzeigeinformationen das zweite Messobjekt anzeigen,
wobei das erste Messobjekt eine erste Messressourcenkonfiguration für eine Messung einer ersten Art umfasst und das zweite Messobjekt eine zweite Messressourcenkonfiguration für eine Messung einer zweiten Art umfasst und
**dadurch gekennzeichnet, dass**
die Messung der ersten Art eine SSB-basierte Messung ist und die Messung der zweiten Art eine CSI-RS-basierte Messung ist; oder die Messung der ersten Art eine CSI-RS-basierte Messung ist und die Messung der zweiten Art eine SSB-basierte Messung ist.

5. Einrichtung (600) nach Anspruch 4, wobei die ersten Anzeigeinformationen in dem aktiveFunkzelleMO in der dedizierten Konfiguration der aktiven Funkzelle enthalten sind und die zweiten Anzeigeinformationen in einem anderen Feld als dem aktiveFunkzelleMO in der dedizierten Konfiguration der aktiven Funkzelle enthalten sind.

## Revendications

1. Procédé d'indication d'objet de mesure, comprenant :
la réception (301), par un terminal, d'informations de configuration de mesure, dans lequel les informations de configuration de mesure comprennent un premier objet de mesure et un second objet de mesure ; et
la réception (302), par le terminal, d'une configuration de cellule de desserte dédiée, dans lequel la configuration de cellule de desserte dédiée comprend des premières informations d'indication et des secondes informations d'indication, les premières informations d'indication indiquent le premier objet de mesure, et les secondes informations d'indication indiquent le second objet de mesure,
dans lequel le premier objet de mesure comprend une première configuration de ressources de mesure pour une mesure de premier type, et le second objet de mesure comprend une seconde configuration de ressources de mesure pour une mesure de second type, et
**caractérisé en ce que**
la mesure de premier type est une mesure basée sur SSB, et la mesure de second type est une mesure basée sur CSI-RS ; ou la mesure de premier type est une mesure basée sur CSI-RS, et la mesure de second type est une mesure basée sur SSB.

2. Procédé selon la revendication 1, dans lequel les premières informations d'indication sont comprises dans servingCellMO dans la configuration de cellule de desserte dédiée, et les secondes informations d'indication sont comprises dans un autre champ autre que servingCellMO dans la configuration de cellule de desserte dédiée.

3. Procédé selon l'une quelconque des revendications 1 ou 2, dans lequel le premier objet de mesure comprend la première configuration de ressources de mesure pour la mesure de premier type et ne comprend pas la seconde configuration de ressources de mesure pour la mesure de second type, et le second objet de mesure comprend la seconde configuration de ressources de mesure pour la mesure de second type et ne comprend pas la première configuration de ressources de mesure pour la mesure de premier type.

4. Appareil d'indication d'objet de mesure (600), l'appareil étant un dispositif terminal, ou un appareil dans un dispositif terminal, comprenant :
une unité de traitement (601), configurée pour commander une unité de réception (602), pour recevoir et envoyer des données ; et
l'unité de réception (602), configurée pour recevoir des informations de configuration de mesure, dans lequel les informations de configuration de mesure comprennent un premier objet de mesure et un second objet de mesure ;
l'unité de réception (602) est en outre configurée pour recevoir une configuration de cellule de desserte dédiée, dans lequel la configuration de cellule de desserte dédiée comprend des premières informations d'indication et des secondes informations d'indication, les premières informations d'indication indiquent le premier objet de mesure, et les secondes informations d'indication indiquent le second objet de mesure,
dans lequel le premier objet de mesure comprend une première configuration de ressources de mesure pour une mesure de premier type, et le second objet de mesure comprend une seconde configuration de ressources de mesure pour une mesure de second type, et
**caractérisé en ce que**
la mesure de premier type est une mesure basée sur SSB, et la mesure de second type est une mesure basée sur CSI-RS ; ou la mesure de premier type est une mesure basée sur CSI-RS, et la mesure de second type est une mesure basée sur SSB.

5. Appareil (600) selon la revendication 4, dans lequel les premières informations d'indication sont comprises dans servingCellMO dans la configuration de cellule de desserte dédiée, et les secondes informations d'indication sont comprises dans un autre champ autre que servingCellMO dans la configuration de cellule de desserte dédiée.
